# EUROPEAN PATENT APPLICATION

(11) **EP 2 805 819 A1**
(43) Date of publication of application: **26.11.2014**
(21) Application number: 14166819.4
(22) Date of filing: 02.05.2014
(51) Int. Cl.: B32B 17/10, C03C 17/245, C03C 17/34, C03C 27/10, G02F 1/01

(54) **Thermochromic window**

(30) Priority: 03.05.2013 KR 20130050124
(71) Applicant: Samsung Corning Precision Materials Co., Ltd., Gyeongsangbuk-do Gumi-si, 730-735 (KR)
(72) Inventor: Jung, Youngsoo, 336-841 Asan-si ChungCheongNam-Do (KR); Bae, Seulgi, 336-841 Asan-si ChungCheongNam-Do (KR); Kim, Hyun Bin, 336-841 Asan-si ChungCheongNam-Do (KR); Jung, Yung-Jin, 336-841 Asan-si ChungCheongNam-Do (KR); Choi, YongWon, 336-841 Asan-si ChungCheongNam-Do (KR)
(74) Representative: Gulde & Partner

(57) **Abstract**

A thermochromic window, the sunlight transmittance of which is adjustable depending on the temperature, and a method of fabricating the same. The thermochromic window includes a flexible substrate, a thermochromic thin film disposed on the flexible substrate, and a hot-processed substrate bonded to the thermochromic thin film.

## Description

### CROSS REFERENCE TO RELATED APPLICATION

The present application claims priority from Korean Patent Application Number 10-2013-0050124 filed on May 3, 2013, the entire contents of which are incorporated herein for all purposes by this reference.

### BACKGROUND OF THE INVENTION

### Field of the Invention

The present invention relates to a thermochromic window and a method of fabricating the same, and more particularly, to a thermochromic window, the sunlight transmittance of which is adjustable depending on the temperature, and a method of fabricating the same.

### Description of Related Art

In response to increasing prices of chemical energy sources such as petroleum, the necessity for the development of new energy sources is increasing. In addition, the importance of energy saving technologies is increasing with the necessity for these new energy sources. In fact, at least 60% of energy consumption in common houses is attributed to heating and/or cooling. In particular, common houses and buildings lose as much as 24% of their energy through windows.

Accordingly, a variety of attempts have been made to reduce the amount of energy that is lost through windows by increasing the airtightness and insulation characteristics thereof, while maintaining the aesthetics and characteristics of the view which are the basic functions of windows. Typical methods, by way of example, include varying the size of the window and furnishing highly-insulated windows.

Types of highly-insulated window glass include argon (Ar) injected pair-glass in which Ar gas is situated between a pair of glass panes in order to prevent heat exchange, a vacuum window in which the air between a pair of glass panes is evacuated, a low emissivity (low-e) window, and the like. Also being studied is a type of glass that is coated with a layer that has specific thermal characteristics in order to adjust the amount of solar energy that is introduced.

In particular, the surface of the low-e window is coated with a thin layer of metal or metal oxide which allows most visible light that is incident on the window to enter so that the interior of a room can be kept bright, while radiation in the infrared (IR) range can be blocked. The effects of this glass are that it prevents heat from escaping to the outside when heating in winter, and also prevents heat energy from outside a building from entering in summer, thereby reducing cooling and heating bills. However, this window has the following drawbacks due to its characteristic of reflecting wavelengths other than visible light. Specifically, it does not admit the IR range of sunlight into a room, which is a drawback, especially in winter, and the sunlight transmittance thereof is not adjusted according to the season (temperature).

Accordingly, the development of technologies for thermochromic windows which are provided by coating glass with a thermochromic material is underway. Such a thermochromic window blocks near infrared (NIR) radiation and infrared (IR) radiation while allowing visible light to pass through when the glass arrives at a predetermined temperature or higher, thereby preventing the room temperature from rising. This can consequently improve cooling/heating energy efficiency.

In particular, a variety of research is underway on thermochromic windows which are created by coating a glass with vanadium dioxide (VO₂), the phase transition temperature of which is close to the temperature at which practical application is possible. In addition, it is easy to control the transmittance of VO₂ since its optical constant (n, k) changes significantly.

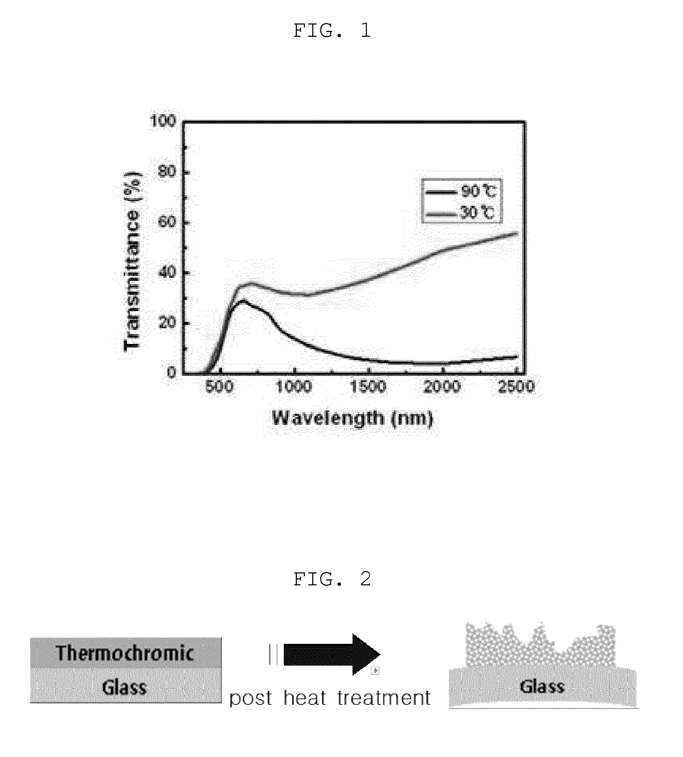

FIG. 1 is a graph showing variations in the sunlight transmittance of a related-art thermochromic window, before and after a phase transition, in which one surface of a glass substrate is coated with a VO₂ thin film.

As shown in FIG. 1, it is noticeable that, when the glass substrate is coated with VO₂, the sunlight transmittance, in particular, in the near infrared (NIR) radiation range differs before and after a phase transition. The curve designated at 30°C refers to the sunlight transmittance before the phase transition, whereas the curve designated with at 90°C refers to the sunlight transmittance after the phase transition. This can consequently improve the efficiency of cooling/heating energy in a building or the like.

Tempered glass or strengthened glass is used for architectural glass, and curved glass that is curved according to the streamlined shape of a vehicle is used for automotive glass.

In order to use thermochromic glass for architectural or automotive glass, post heat treatment for tempering, strengthening or curving a piece of thermochromic glass is required.

When coating glass is subjected to post heat treatment in the air, it tends to suffer from changes in its properties. This also occurs in a thermochromic coating. Specifically, when a thermochromic window having a substrate coated with a thermochromic material is hot-processed, the thermochromic coating deteriorates and loses its thermochromic function. In addition, the thermochromic window suffers from defects, such as discoloration, pinholes, hazing, cracking or image distortion. FIG. 2 is a schematic conceptual view illustrating deterioration of a thermochromic window caused by post heat treatment.

In order to solve these problems, at least one of the top and lower surfaces of the thermochromic thin film is coated with an oxide film, a nitride film or a metal film. However, this approach has a drawback in that a material satisfying the conditions for hot thermal processing must be selected, the thickness of each film must be controlled very sensitively.

The information disclosed in the Background of the Invention section is provided only for better understanding of the background of the invention, and should not be taken as an acknowledgment or any form of suggestion that this information forms a prior art that would already be known to a person skilled in the art.

### Related Art Document

Patent Document 1: Korean Patent Application Publication No. 10-2008-0040439 (May 8, 2008)

### BRIEF SUMMARY OF THE INVENTION

Various aspects of the present invention provide a thermochromic window which has a hot-processed substrate without losing its thermochromic characteristics and a method of fabricating the same.

In an aspect of the present invention, provided is a thermochromic window that includes: a flexible substrate; a thermochromic thin film disposed on the flexible substrate; and a hot-processed substrate bonded to the thermochromic thin film.

According to an embodiment of the present invention, the hot-processed substrate may be one selected from the group consisting of a piece of tempered glass, a piece of strengthened glass and a piece of curved glass.

The hot-processed substrate may be bonded to the thermochromic thin film by means of an adhesive or an adhesive film.

The composition of the thermochromic thin film may include vanadium dioxide (VO₂).

The thermochromic window may further include at least one anti-reflection film disposed on at least one of upper and lower surfaces of the thermochromic thin film.

The anti-reflection film may be made of an oxide of one selected from the group consisting of Ti, Zn, Nb, Sn and Zr or a nitride of Si.

The thermochromic thin film may be made of a thermochromic material doped with a dopant.

The dopant may be at least one selected from the group consisting of Mo, W, Nb, Ta, Fe, Al, Ti, Sn and Ni.

The flexible substrate may be a piece of flexible glass.

In another aspect of the present invention, provided is a method of fabricating a thermochromic window. The method includes the following steps of: preparing a hot-processed substrate and a flexible substrate having a thermochromic thin film thereon; and bonding the hot-processed substrate to the thermochromic thin film.

According to an embodiment of the present invention, the hot-processed substrate may be bonded to the thermochromic thin film by means of an adhesive or an adhesive film.

According to embodiments of the invention, a substrate that requires hot processing for tempering, strengthening, curving, or the like is hot-processed separately from the process of forming a thermochromic thin film. Afterwards, the thermochromic thin film is bonded to the hot-processed substrate. It is therefore possible to fabricate a thermochromic window which has a hot-processed substrate without losing its thermochromic characteristics.

The methods and apparatuses of the present invention have other features and advantages which will be apparent from, or are set forth in greater detail in the accompanying drawings, which are incorporated herein, and in the following Detailed Description of the Invention, which together serve to explain certain principles of the present invention.

### BRIEF DESCRIPTION OF THE DRAWINGS

FIG. 1 is a graph showing variations in the sunlight transmittance of a conventional thermochromic window before and after a phase transition, the thermochromic window having a VO₂ thin film on one surface of a glass substrate;
FIG. 2 is a schematic conceptual view illustrating the deterioration of a thermochromic window caused by post heat treatment; and
FIG. 3 is a conceptual cross-sectional view showing a thermochromic window according to an exemplary embodiment of the present invention.

### DETAILED DESCRIPTION OF THE INVENTION

Reference will now be made in detail to $ according to the present invention, embodiments of which are illustrated in the accompanying drawings and described below, so that a person skilled in the art to which the present invention relates can easily put the present invention into practice.

Throughout this document, reference should be made to the drawings, in which the same reference numerals and signs are used throughout the different drawings to designate the same or similar components. In the following description of the present invention, detailed descriptions of known functions and components incorporated herein will be omitted when they may make the subject matter of the present invention unclear.

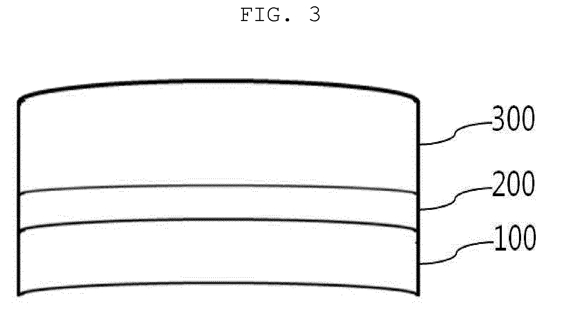

FIG. 3 is a conceptual cross-sectional view showing a thermochromic window according to an exemplary embodiment of the present invention.

As shown in FIG. 3, the thermochromic window according to this exemplary embodiment includes a flexible substrate 100, a thermochromic thin film 200 and a hot-processed substrate 300.

The flexible substrate 100 is the base substrate that is coated with the thermochromic thin film 200, and is characterized by being bendable.

The flexible substrate 100 must endure hot processing for the formation of the thermochromic thin film. In general, the hot processing is performed at 250°C or higher when the thermochromic thin film is made of vanadium dioxide (VO₂). Therefore, a piece of flexible glass is desirable for the flexible substrate 100, but any polymeric material, such as polyethylene terephthalate (PET), polyvinyl acetate (PVA) or polyimide (PI), is undesirable.

The flexible glass can be bent without being broken due to its thin profile. For the flexible glass, Willow Glass having a thickness of about 0.1 mm, available from Corning Inc., can be used.

Since the thermochromic thin film 200 coats the flexible substrate 100 as described above, the thermochromic thin film 200 can be independent from the shape of the hot-processed substrate 300 during the future process of bonding the hot-processed substrate 300 to the thermochromic thin film 200.

The thermochromic thin film 200 is disposed on the flexible substrate 100.

The thermochromic thin film 200 can be formed by sputtering a thermochromic material onto the flexible substrate 100. The thermochromic material refers to the material that undergoes a change in the crystalline structure due to the thermochromic phenomenon in which its phase transits at a specific temperature (i.e. its phase transition temperature), whereby its physical properties, such as electrical conductivity and infrared (IR) transmittance, significantly change. The sunlight transmittance or reflectance, in particular, the near infrared (NIR) transmittance or reflectance of the thermochromic material significantly differs before and after the phase transition. Accordingly, the thermochromic thin film 200 can block IR radiation from the hot summer sun to prevent heat energy from entering, thereby reducing the cooling load, and can allow IR radiation from the cold winter sun to pass through, thereby reducing the heating load.

The composition of the thermochromic material may include one selected from among, but not limited to, vanadium dioxide (VO₂), titanium (III) oxide (Ti₂O₃), niobium dioxide (NbO₂) and nickel sulfide (NiS). It is preferred that the thermochromic material be VO₂.

In addition, the thermochromic thin film 200 can be made of a thermochromic material doped with a dopant.

It is possible to control the phase transition temperature of the thermochromic material by doping the thermochromic material with the dopant. The phase transition temperature of the thermochromic material generally lowers with the increasing doping ratio of the dopant.

The dopant can be one selected from among, but not limited to, Mo, W, Nb, Ta, Fe, Al, Ti, Sn and Ni.

The hot-processed substrate 300 is bonded to the thermochromic thin film 200.

The hot-processed substrate 300 can be one selected from among, but not limited to, a piece of tempered glass, a piece of strengthened glass and a piece of curved glass.

The hot-processed substrate 300 can be bonded to the thermochromic thin film 200 by means of an adhesive or an adhesive film made of, for example, polyvinyl butyral (PVB), polyvinyl alcohol (PVA) or ethylene vinyl acetate (EVA).

In addition, the thermochromic window can further include at least one antireflection film (not shown) which is disposed on at least one of the upper and lower surfaces of the thermochromic thin film 200.

The antireflection film (not shown) reduces reflection of visible light from the thermochromic window, thereby improving the visible light transmittance of the thermochromic window.

The antireflection film (not shown) can be made of an oxide of one selected from the group consisting of Ti, Zn, Nb, Sn and Zr or a nitride of Si.

The antireflection film (not shown) disposed on the lower surface of the thermochromic window can serve as a diffusion barrier that prevents ions inside the flexible substrate 100 from diffusing into the thermochromic thin film 200. The process of forming the thermochromic thin film 200 is generally carried out at high temperature. When the thermochromic thin film 200 is formed directly on the flexible substrate 100, ions inside the flexible substrate 100 diffuse into the thermochromic thin film 200 while the flexible substrate 100 is being coated with the thermochromic thin film 200, whereby the thermochromic thin film 200 may lose its thermochromic characteristics. In particular, when the flexible substrate 200 is made of soda-lime glass, sodium (Na) ions inside the glass diffuse into the thermochromic thin film 200. This phenomenon is referred to as sodium diffusion. Accordingly, the antireflection film (not shown) disposed between the flexible substrate 100 and the thermochromic thin film can prevent ions inside the flexible substrate 100 from diffusing into the thermochromic thin film 200, thereby preventing the thermochromic thin film 200 from losing its thermochromic characteristics.

The thermochromic window as described above can be fabricated by preparing the hot-processed substrate 300 and the flexible substrate 100 coated with the thermochromic thin film 200, and then bonding the hot-processed substrate 300 to the thermochromic thin film 200.

Specifically, it is possible to fabricate the thermochromic window by carrying out the hot processing on the substrate which requires the hot processing for tempering, strengthening or curving and the process of forming the thermochromic thin film by separate processes and then bonding the hot-processed substrate to the thermochromic thin film.

Since the thermochromic window is fabricated in this manner, the thermochromic window can have the substrate hot-processed without losing its thermochromic characteristics.

Specifically, it is possible to fabricate the thermochromic thin film having the hot-processed substrate without having to directly expose the flexible substrate on which the thermochromic thin film is formed to the hot processing by separately hot-processing only the architectural or automotive substrate that actually requires hot processing, such as tempering, strengthening or curving, before bonding the architectural or automotive substrate to the thermochromic thin film.

Table 1 below presents the visible light transmittance of conventional thermochromic windows and thermochromic windows according to the present invention before and after heat treatment.

**Table 1**

| Classification | | Multilayer structure | Visible light transmittance | |
|---|---|---|---|---|
| | | | Before | After |
| Comparative Example | 1 | Glass/VO₂ | 40 | 72 |
| | 2 | Glass/TiO₂/VO₂/TiO₂ | 52 | 74 |
| | 3 | Glass/TiO₂/NiCr/VO₂/NiCr/TiO₂ | 36 | 48 |
| Example | 1 | Glass/PVB/VO₂/Willow | 40 | 46 |
| | 2 | Glass/PVB/TiO₂/VO₂/TiO₂/Willow | 52 | 58 |

In Table 1, glass substrates used in Comparative Examples 1 to 3 and Examples 1 and 2 are soda-lime glass, and flexible substrates used in Examples 1 and 2 are Willow Glass available from Corning Inc.

In Comparative Examples 1 to 3, the visible light transmittances after heat treatment were measured after the entire deposit film was heat-treated. In Comparative Examples 1 and 2, the visible light transmittances after heat treatment were measured after only the glass substrates were heat-treated. The heat treatment was carried out in the atmospheric air at 700°C for 10 minutes.

Comparative Example 1 exhibits a significant increase in the visible light transmittance after the heat treatment of the deposit film. This indicates that VO₂ was oxidized and thus lost its thermochromic characteristics. According to Comparative Example 2, VO₂ was oxidized although TiO₂ thin films were formed on the upper and lower surfaces of the VO₂ thin film in order to protect VO₂. According to Comparative Example 3, NiCr thin films were formed on the upper and lower surfaces of the VO₂ thin film in order to prevent VO₂ from being oxidized. These deposit films were able to reduce the oxidation of VO₂ due to heat treatment to a certain level, but there is a drawback in that the structure is complicated.

In contrast, according to Examples 1 and 2, substantially no VO₂ was oxidized. This is because VO₂ was not exposed directly to the heat treatment.

The foregoing descriptions of specific exemplary embodiments of the present invention have been presented with respect to the drawings. They are not intended to be exhaustive or to limit the present invention to the precise forms disclosed, and obviously many modifications and variations are possible for a person having ordinary skill in the art in light of the above teachings.

It is intended therefore that the scope of the present invention not be limited to the foregoing embodiments, but be defined by the Claims appended hereto and their equivalents.

## Claims

1. A thermochromic window comprising:
a flexible substrate;
a thermochromic thin film disposed on the flexible substrate; and
a hot-processed substrate bonded to the thermochromic thin film.

2. The thermochromic window according to claim 1, wherein the hot-processed substrate comprises one selected from the group consisting of a piece of tempered glass, a piece of strengthened glass and a piece of curved glass.

3. The thermochromic window according to claim 1, wherein the hot-processed substrate is bonded to the thermochromic thin film by means of an adhesive or an adhesive film.

4. The thermochromic window according to claim 1, wherein a composition of the thermochromic thin film includes vanadium dioxide.

5. The thermochromic window according to claim 1, further comprising at least one anti-reflection film disposed on at least one of upper and lower surfaces of the thermochromic thin film.

6. The thermochromic window according to claim 5, wherein the anti-reflection film is made of an oxide of one selected from the group consisting of Ti, Zn, Nb, Sn and Zr or a nitride of Si.

7. The thermochromic window according to claim 1, wherein the thermochromic thin film is made of a thermochromic material doped with a dopant.

8. The thermochromic window according to claim 7, wherein the dopant comprises at least one selected from the group consisting of Mo, W, Nb, Ta, Fe, Al, Ti, Sn and Ni.

9. The thermochromic window according to claim 1, wherein the flexible substrate comprises a piece of flexible glass.
